# EUROPÄISCHE PATENTSCHRIFT

(11) **EP 0 681 007 B1**
(45) Veröffentlichungstag und Bekanntmachung des Hinweises auf die Patenterteilung: **26.01.2000**
(21) Anmeldenummer: 95106234.8
(22) Anmeldetag: 26.04.1995
(51) Int. Cl.: C09B 67/22, D06P 1/38, C09B 62/022, C09B 67/00

(54) **Mischungen von faserreaktiven Farbstoffen und deren Verwendung zum Färben von Fasermaterialien**
Reactive dye mixtures and their use for dyeing fibrous materials
Mélanges de colorants réactifs et leur utilisation pour la teinture de matières fibreuses

(30) Priorität: 02.05.1994 DE 4415313
(43) Veröffentlichungstag der Anmeldung: 08.11.1995
(73) Patentinhaber: DyStar Textilfarben GmbH & Co. Deutschland KG, 60318 Frankfurt am Main (DE)
(72) Erfinder: Russ, Werner Hubert, Dr., D-65439 Flörsheim (DE); Hussong, Kurt, Dr., D-65812 Bad Soden (DE); Krieger, Karl, D-65510 Hünstetten (DE); Mrotzeck, Uwe, Dr., D-65779 Kelkheim (DE)

(56) Entgegenhaltungen:
- EP-A- 0 478 503
- GB-A- 2 007 698
- GB-A- 2 008 143
- CHEMICAL ABSTRACTS, vol. 114, no. 8, 25.Februar 1991 Columbus, Ohio, US; abstract no. 64186v, Seite 105; & JP-A-02 202 956 (REEWHA INDUSTRIAL CO) 13.August 1990

## Beschreibung

Die Erfindung liegt auf dem technischen Gebiet der faserreaktiven Farbstoffe.

Mit der vorliegenden Erfindung wurden neue Farbstoffmischungen gefunden, die hydroxy- und/oder carbonamidgruppenhaltige Fasermaterialien, wie Cellulosefasermaterialien und Wolle, in brillanten orangen bis roten Tönen zu färben vermögen. Die Mischungen enthalten einen oder mehrere, wie 2, 3 oder 4, Disazofarbstoffe entsprechend der allgemeinen Formel (1) und einen oder mehrere, wie 2 oder 3, Monoazofarbstoffe der allgemeinen Formel (2A) oder (2B) oder (2C) oder eine Mischung dieser Monoazofarbstoffe.

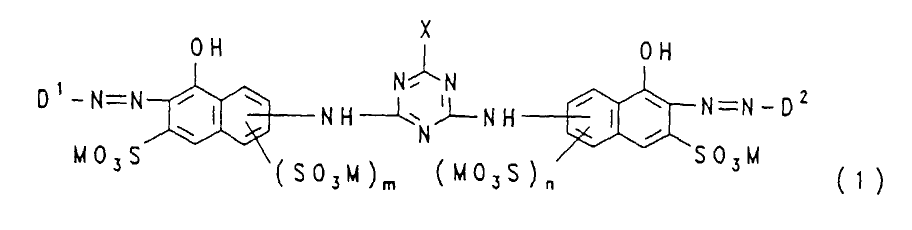

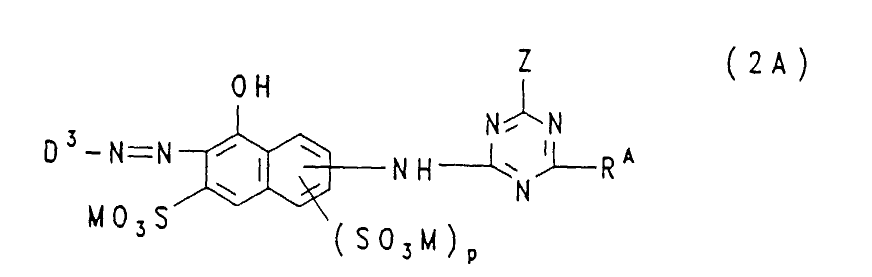

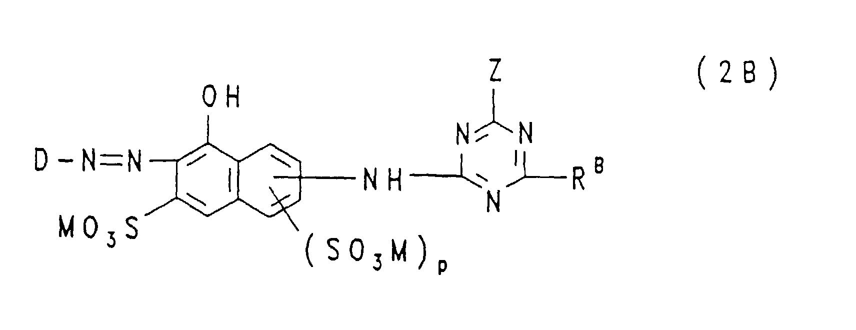

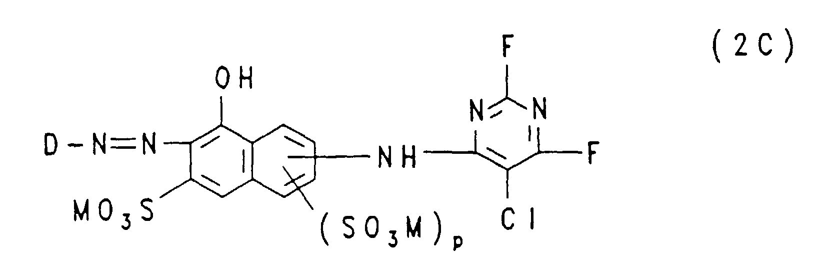

Die Farbstoffe der allgemeinen Formel (1) sind zu 95 bis 50 Gew.-%, die Farbstoffe der allgemeinen Formeln (2) zu 5 bis 50 Gew.-%, jeweils bezogen auf die Gesamtmenge dieser Farbstoffe der allgemeinen Formeln (1) und (2), in den Mischungen enthalten.

In diesen Formeln bedeuten:
- M: ist Wasserstoff oder ein Alkalimetall, wie Natrium, Kalium oder Lithium;
- D¹: ist eine Gruppe der allgemeinen Formel (2a) oder (2b) 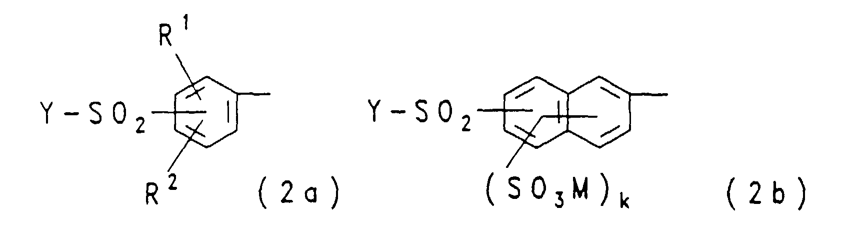 in welchen
R¹ Wasserstoff, Methyl, Ethyl, Methoxy, Ethoxy, Sulfo oder Carboxy, bevorzugt Wasserstoff, ist,
R² Wasserstoff, Methyl, Ethyl, Methoxy, Ethoxy oder Sulfo, bevorzugt Wasserstoff oder Methoxy, insbesondere Wasserstoff, ist,
Y Vinyl ist oder Ethyl ist, das in β-Stellung einen Substituenten enthält, der durch Alkali unter Bildung der Vinylgruppe eliminierbar ist,
M die obengenannte Bedeutung hat und
k für die Zahl Null, 1 oder 2 steht (wobei im Falle von k gleich Null diese Gruppe für Wasserstoff steht);
- D²: hat eine der für D¹ angegebenen Bedeutungen;
- D³: hat eine der für D¹ angegebenen Bedeutungen;
- D: ist eine Gruppe der allgemeinen Formel (3a) oder (3b) 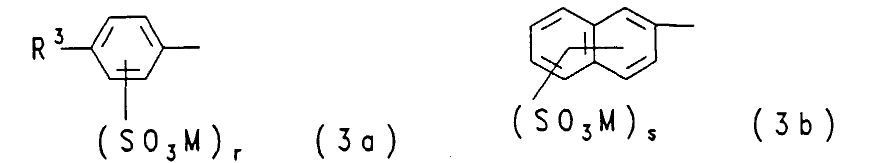 in welchen
R³ Wasserstoff, Methoxy, Ethoxy, Methyl oder Ethyl ist,
M die obengenannte Bedeutung hat,
r für die Zahl Null, 1 oder 2 steht (wobei im Falle von r gleich Null diese Gruppe Wasserstoff bedeutet) und
s die Zahl 1, 2 oder 3 ist;
- X: ist Chlor, Fluor, Hydroxy, Cyanoamino oder Alkylamino von 1 bis 4 C-Atomen, wie Methylamino oder Ethylamino, bevorzugt Chlor oder Fluor;
- m: ist die Zahl Null oder 1 (wobei im Falle von m gleich Null diese Gruppe Wasserstoff bedeutet);
- n: ist die Zahl Null oder 1 (wobei im Falle von n gleich Null diese Gruppe Wasserstoff bedeutet);
- p: ist die Zahl Null oder 1 (wobei im Falle von p gleich Null diese Gruppe Wasserstoff bedeutet);
- Z: ist Chlor oder Fluor;
- R^{A}: ist Chlor, Hydroxy, Phenoxy, Morpholino oder eine Gruppe der allgemeinen Formel (4a), (4b) oder (4c) 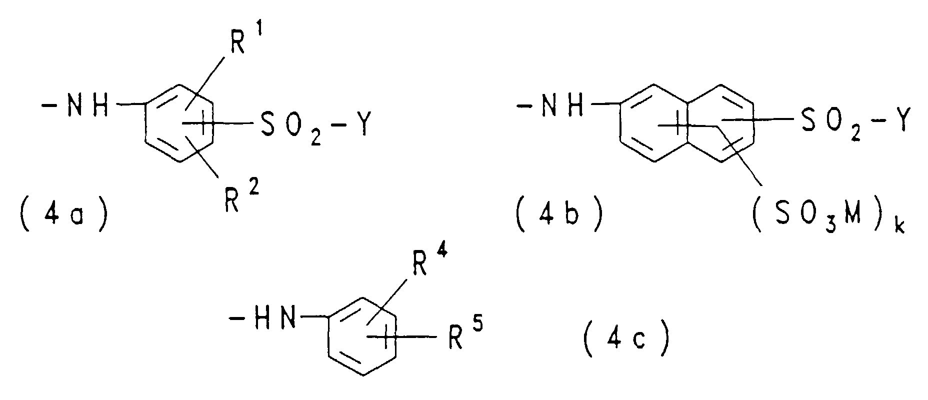 in welchen
R¹, R², Y, M und k eine der obengenannten Bedeutungen haben,
R⁴ Wasserstoff, Sulfo, Carboxy, Methyl, Ethyl, Methoxy, Ethoxy oder Hydroxy ist und
R⁵ Wasserstoff, Sulfo, Methyl, Ethyl, Methoxy oder Ethoxy bedeutet;
- R^{B}: ist eine Gruppe der allgemeinen Formel (5a), (5b) oder (5c) 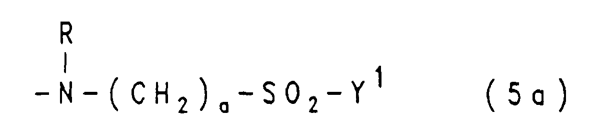 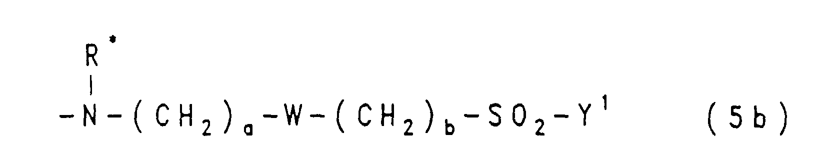 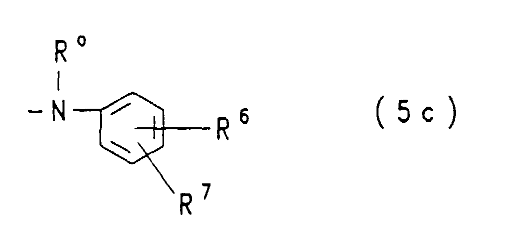 in welchen
Y¹ eine der obengenannten Bedeutungen hat,
R Wasserstoff oder Phenyl ist, das durch 1 oder 2 Substituenten aus der Gruppe Methyl, Ethyl, Methoxy, Ethoxy, Sulfo und Carboxy substituiert sein kann, oder Alkyl von 1 bis 4 C-Atomen, wie Ethyl oder Methyl, ist oder eine Gruppe der allgemeinen Formel -(CH₂)ₐ-SO₂-Y¹ mit Y¹ der oben angegebenen Bedeutung und mit a gleich der Zahl 1, 2 oder 3 ist,
a die Zahl 1, 2 oder 3 ist,
b die Zahl 2 oder 3 ist,
W für eine Gruppe der Formel -O- oder -NH- steht,
R* Wasserstoff oder Phenyl ist, das durch 1 oder 2 Substituenten aus der Gruppe Methyl, Ethyl, Methoxy, Ethoxy, Sulfo und Carboxy substituiert sein kann, oder Alkyl von 1 bis 4 C-Atomen, wie Ethyl oder Methyl, ist oder eine Gruppe der allgemeinen Formel -(CH₂)ₐ-W-(CH₂)_{b}-SO₂-Y¹ mit a, b, W und Y¹ der oben angegebenen Bedeutung ist,
R^{o} Wasserstoff, Methyl, Ethyl oder β-Sulfoethyl ist,
R⁶ Wasserstoff, Methyl, Ethyl, Methoxy, Ethoxy, Sulfo, Carboxy, Hydroxy oder eine Gruppe der allgemeinen Formel -(CH₂)ₐ-SO₂-Y mit Y und a der obengenannten Bedeutung ist und
R⁷ Wasserstoff, Methoxy, Ethoxy oder Sulfo bedeutet.

In Formel (1) stehen die mit dem Triazinrest verbundenen Gruppen -NH-bevorzugt in 1-Stellung an den jeweiligen 8-Hydroxy-naphthalin-Rest, wobei m und n jeweils für die Zahl 1 stehen und diese Gruppen -SO₃M jeweils in 3-oder in 4-Stellung an den jeweiligen 8-Hydroxy-naphthalin-Rest gebunden sind; in den Formeln (2A), (2B) und (2C) ist p bevorzugt die Zahl Null und die Gruppe -NH- steht bevorzugt in 2- oder 3-Stellung, insbesondere bevorzugt in 3-Stellung, an den 8-Hydroxy-naphthalin-Rest gebunden.

Die einzelnen Formelglieder in den obengenannten und ebenso in den nachfolgend genannten allgemeinen Formeln, auch solche mit gleicher Bezeichnung innerhalb einer allgemeinen Formel, können im Rahmen ihrer Bedeutung zueinander gleiche oder voneinander verschiedene Bedeutungen besitzen.

Die in den erfindungsgemäßen Mischungen enthaltenen Farbstoffe sind bekannt (bspw. aus den deutschen Offenlegungsschriften Nrs. 27 48 965 und 27 48 966, den japanischen Patentanmeldungs-Veröffentlichungen Hei-2-073 870 und Hei-2-202 956 und dem koreanischen Patent Nr. 86/594) oder können analog den dort gemachten Angaben hergestellt werden.

Alkalisch eliminierbare Substituenten, die in β-Stellung der Ethylgruppe von Y oder Y¹ stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Y β-Sulfatoethyl oder Vinyl und insbesondere bevorzugt β-Sulfatoethyl und Y¹ β-Sulfatoethyl, β-Chlorethyl oder Vinyl und insbesondere bevorzugt β-Sulfatoethyl oder Vinyl.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel -SO₃M Carboxygruppen Gruppen entsprechend der allgemeinen Formel -COOM, Thiosulfatogruppen Gruppen entsprechend der allgemeinen Formel -S-SO₃M , Phosphatogruppen Gruppen entsprechend der allgemeinen Formel -OPO₃M₂ und Sulfatogruppen Gruppen entsprechend der allgemeinen Formel -OSO₃M , in welchen M die obengenannte Bedeutung besitzt.

Reste der allgemeinen Formeln (2a) und (2b) sind beispielsweise 3-(β-Sulfatoethylsulfonyl)-phenyl, 4-(β-Sulfatoethylsulfonyl)-phenyl, 2-Methyl-5-methoxy-4-(β-sulfatoethylsulfonyl)-phenyl, 2-Methoxy-5-(β-sulfatoethylsulfonyl)phenyl, 2,5-Dimethoxy-4-(β-sulfatoethylsulfonyl)-phenyl, 1-Sulfo-6-(β-sulfatoethylsulfonyl)-naphth-2-yl, 6-Sulfo-8-(β-sulfatoethylsulfonyl)-naphth-2-yl, 8-Sulfo-6-(β-sulfatoethylsulfonyl)-naphth-2-yl sowie deren Vinylsulfonyl- und β-Thiosulfatoethylsulfonyl-Derivate, hiervon bevorzugt 3-(β-Sulfatoethylsulfonyl)-phenyl, 4-(β-Sulfatoethylsulfonyl)-phenyl, 2-Methoxy-5-(β-sulfatoethylsulfonyl)-phenyl und 2,5-Dimethoxy-4-(β-sulfatoethylsulfonyl)-phenyl.

Reste der allgemeinen Formeln (4a), (4b) und (4c) sind beispielsweise 3-(β-Sulfatoethylsulfonyl)-phenyl, 4-(β-Sulfatoethylsulfonyl)-phenyl, 2-Methyl-5-methoxy-4-(β-sulfatoethylsulfonyl)-phenyl, 2-Methoxy-5-(β-sulfatoethylsulfonyl)phenyl, 2,5-Dimethoxy-4-(β-sulfatoethylsulfonyl)-phenyl, 1-Sulfo-6-(β-sulfatoethylsulfonyl)-naphth-2-yl, 6-Sulfo-8-(β-sulfatoethylsulfonyl)-naphth-2-yl, 8-Sulfo-6-(β-sulfatoethylsulfonyl)-naphth-2-yl sowie deren Vinylsulfonyl- und β-Thiosulfatoethylsulfonyl-Derivate sowie 4-Hydroxy-3-sulfo-phenylamino, 3-Sulfo-phenylamino, 4-Sulfo-phenylamino und 2-Methyl-phenylamino.

Reste der allgemeinen Formeln (5a), (5b) und (5c) sind beispielsweise γ-(β-Sulfatoethylsulfonyl)-propylamino, N-Phenyl-N-[γ-(β'-sulfatoethylsulfonyl)propyl]-amino, β-(β'-Chlorethylsulfonyl)-ethylamino, N-Phenyl-N-[β-(β'-sulfatoethylsulfonyl)-ethyl]-amino, Bis-N,N-[β-(β'-chlorethylsulfonyl)-ethyl]amino, Bis-N,N-[β-(vinylsulfonyl)-ethyl]-amino, 3-(β-Sulfatoethylsulfonyl)phenylamino, 4-(β-Sulfatoethylsulfonyl)-phenylamino, N-Methyl-anilin und N-Ethyl-anilin.

Bevorzugt enthalten die erfindungsgemäßen Farbstoffmischungen den oder die Disazofarbstoffe der Formel (1) zu 90 bis 50 Gew,-% und den oder die Monoazofarbstoffe der Formeln (2) zu 10 bis 50 Gew.-%; bevorzugt sind weiterhin Farbstoffmischungen aus den Farbstoffen der allgemeinen Formeln (1) und (2), die den oder die Disazofarbstoffe der Formel (1) zu 85 bis 55 Gew.-% und den oder die Monoazofarbstoffe der Formeln (2) zu 15 bis 45 Gew.-% enthalten.

Die Mischungen können noch mit einem gelben oder roten Farbstoff von bis zu 10 Gew.-%, vorzugsweise bis zu 5 Gew.-%, nuanciert sein. Solche bekannten Farbstoffe sind beispielsweise Monoazofarbstoffe, die den allgemeinen Formeln (a), (b), (c) und (d) 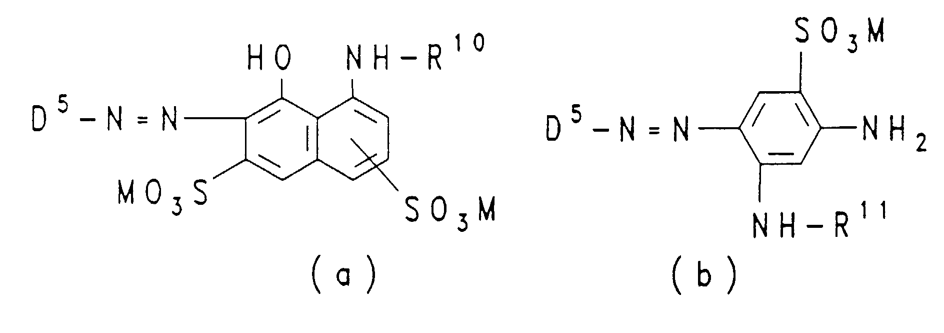 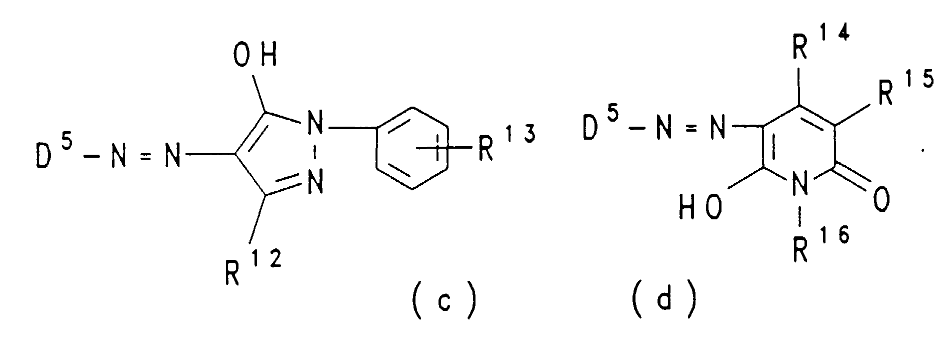 entsprechen, in welchen bedeuten:
- D⁵: ist 3-(β-Sulfatoethylsulfonyl)-phenyl, 4-(β-Sulfatoethylsulfonyl)-phenyl, 3-Vinylsulfonyl-phenyl, 4-Vinylsulfonyl-phenyl, 2-Methoxy-5-(β-sulfatoethylsulfonyl)-phenyl oder 2-Methoxy-5-vinylsulfonyl-phenyl;
- M: hat eine der obengenannten Bedeutungen;
- R¹⁰: ist Acetyl, Benzoyl, 4,6-Di-cyanamido-1,3,5-triazin-2-yl, 4-Cyanamido-6-(sulfophenylamino)-1,3,5-triazin-2-yl, 4-(N-Morpholino)-6-(sulfophenylamino)-1,3,5-triazin-2-yl oder 4-(N-Morpholino)-6-(sulfophenylamino)-1,3,5-triazin-2-yl, das im Benzolkern durch Methyl oder Methoxy substituiert ist;
- R¹¹: ist Acetyl, Carbamoyl, 4,6-Di-cyanamido-1,3,5-triazin-2-yl, 4-Cyanamido-6-(sulfophenylamino)-1,3,5-triazin-2-yl, 4-(N-Morpholino)-6-(sulfophenylamino)-1,3,5-triazin-2-yl oder 4-(N-Morpholino)-6-(sulfophenylamino)-1,3,5-triazin-2-yl, das im Benzolkern durch Methyl oder Methoxy substituiert ist;
- R¹²: ist Methyl oder Carboxy;
- R¹³: ist Sulfo, β-Chlorethylsulfonyl oder β-Sulfatoethylsulfonyl;
- R¹⁴: ist Wasserstoff oder Methyl;
- R¹⁵: ist Wasserstoff, Cyano, Carbamoyl, Carboxy oder Sulfomethyl;
- R¹⁶: ist Methyl, Ethyl oder β-Sulfoethyl.

Die Farbstoffe der Formeln (1) und (2) können bei gleichem Chromophor hinsichtlich der faserreaktiven Gruppen -SO₂-Y und -SO₂-Y¹ unterschiedliche Struktur besitzen. Insbesondere können die Farbstoffmischungen Farbstoffe gleichen Chromophors entsprechend der allgemeinen Formel (1) und Farbstoffe gleichen Chromophors entsprechend einer der allgemeinen Formeln (2) enthalten, in denen die faserreaktiven Gruppen -SO₂-Y und -SO₂-Y¹ zum einen Vinylsulfonylgruppen und zum anderen β-Chlorethylsulfonyl- oder Thiosulfatoethylsulfonyl- oder bevorzugt β-Sulfatoethylsulfonyl-Gruppen sind. Enthalten die Farbstoffgemische die jeweiligen Farbstoffkomponenten in Form eines Vinylsulfonyl-Farbstoffes, so liegt der Farbstoffanteil des jeweiligen Vinylsulfonylfarbstoffes zu dem jeweiligen β-Chlor- oder β-Thiosulfato- oder Sulfatoethylsulfonyl-Farbstoff bei bis zu etwa 30 Mol-%, bezogen auf den jeweiligen Farbstoffchromophor, vor.

Hierbei sind solche Farbstoffmischungen bevorzugt, bei welchen der Anteil an den Vinylsulfonyl-Farbstoffen zu den β-Sulfatoethylsulfonyl-Farbstoffen im Molverhältnis zwischen 5:95 und 30:70 liegt.

Von den Disazofarbstoffen der allgemeinen Formel (1) sind bevorzugt Farbstoffe der allgemeinen Formel (1a) 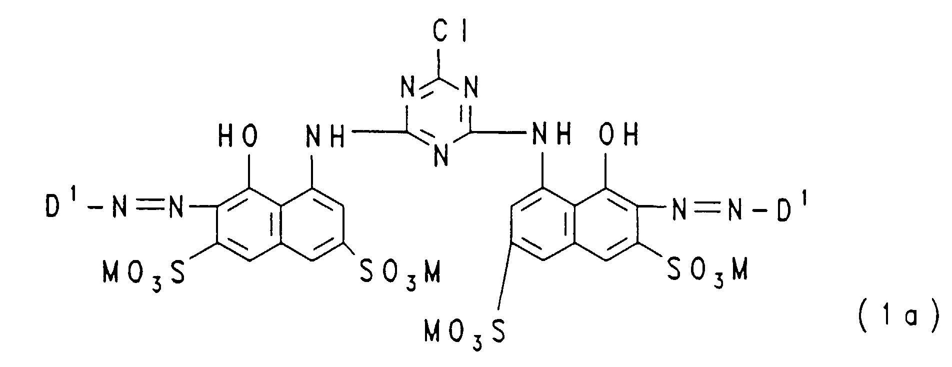 in welcher D¹ jedes eine der oben für die Formeln (2a) und (2b) beschriebenen, insbesondere bevorzugten, Gruppen bedeuten.

Von den Farbstoffen der allgemeinen Formel (2A) sind bevorzugt solche, in denen D³ 2-Methoxy-5-(β-sulfatoethylsulfonyl)-phenyl oder 2,5-Dimethoxy-4-(β-sulfatoethylsulfonyl)-phenyl oder das Vinylsulfonyl-Derivat solch einer Gruppe ist, p für die Zahl Null steht, die Triazinylaminogruppe in 2- oder 3-Stellung, bevorzugt in 3-Stellung, an den 8-Naphthol-Rest gebunden ist, Z für Chlor oder bevorzugt Fluor steht und R^{A} Chlor, Morpholino oder eine Gruppe der oben angegebenen allgemeinen Formel (4c) ist, in welcher R⁴ Wasserstoff, Sulfo, Methyl oder Methoxy ist und R⁵ Wasserstoff, Sulfo oder Methyl bedeutet.

Bevorzugt sind Farbstoffmischungen aus einem oder mehreren Disazofarbstoffen entsprechend der allgemeinen Formel (1), in welchen m und n die obengenannten Bedeutungen haben, X gleich Chlor ist und D¹ und D² zueinander gleich oder voneinander verschieden, einen der eben genannten für den Formelrest (2a) oder (2b) stehenden Rest bedeuten, und einem oder mehreren Monoazofarbstoffen entsprechend der allgemeinen Formel (2A), in welcher m und p die obengenannten Bedeutungen haben, D³ gleich 3- oder 4-(β-Thiosulfatoethylsulfonyl)-phenyl oder 3- oder 4-(Vinylsulfonyl)-phenyl oder 3- oder 4-(β-Sulfatoethylsulfonyl)-phenyl ist, Z für Chlor steht und R^{A} Chlor oder 4-Hydroxy-3-sulfo-phenylamino bedeutet, wobei im Falle, daß sowohl Vinylsulfonyl- als auch β-Sulfatoethylsulfonyl-Gruppen in den Farbstoffmischungen vorliegen, das molare Verhältnis zwischen den Vinylsulfonyl-Anteilen und den β-Sulfatoethylsulfonyl-Anteilen zwischen 5:95 und 30:70 liegt.

Weiterhin sind bevorzugt Farbstoffmischungen aus einem oder mehreren Farbstoffen der allgemeinen Formel (1) der oben angegebenen, insbesondere bevorzugten Bedeutung und einem oder mehreren Farbstoffen der allgemeinen Formel (2C), in welcher D 1,5-Disulfo-naphth-2-yl oder 4-Methyl-2-sulfo-phenyl ist, Z gleich Fluor ist und R⁸ gleich γ-(β'-Sulfatoethylsulfonyl)-propyl-amino, N-Phenyl-N-γ-(β'-sulfatoethylsulfonyl)-propyl-amino, N-Phenyl-β-(β'-sulfatoethylsulfonyl)-ethyl-amino, Bis-[β-(β'-chlorethylsulfonyl)-ethyl]-amino, 3-(β-Sulfatoethylsulfonyl)-phenylamino, N-Methyl-phenylamino, N-Ethylphenylamino oder (β-Sulfatoethylsulfonyl)-oxyethylamino ist, wobei im Falle, daß sowohl Vinylsulfonyl- als auch β-Chlorethylsulfonyl- oder β-Sulfatoethylsulfonyl-Gruppen in den Farbstoffmischungen vorliegen, das molare Verhältnis zwischen den Vinylsulfonyl-Anteilen und den β-Chlorethylsulfonyl- oder β-Sulfatoethylsulfonyl-Anteilen zwischen 5:95 und 30:70 liegt.

Weiterhin sind bevorzugt Farbstoffmischungen aus einem oder mehreren Farbstoffen der allgemeinen Formel (1) der obengenannten, insbesondere bevorzugten, Bedeutung und einem oder mehreren Farbstoffen der allgemeinen Formel (2B), in welcher der Rest D³ gleich 2-Methoxy-5-(β-sulfatoethylsulfonyl)-phenyl, 2,5-Dimethoxy-4-(β-sulfatoethylsulfonyl)-phenyl oder 2-Methoxy-5-vinylsulfonyl-phenyl ist, M und p die obengenannten Bedeutungen haben, Z für Fluor steht und R^{A} Morpholino, 3-Sulfo-phenylamino, Phenoxy oder 2-Methyl-phenylamino ist, wobei im Falle, daß sowohl Vinylsulfonyl- als auch β-Sulfatoethylsulfonyl-Gruppen in den Farbstoffmischungen vorliegen, das molare Verhältnis zwischen den Vinylsulfonyl-Anteilen und den β-Sulfatoethylsulfonyl-Anteilen zwischen 5:95 und 30:70 liegt.

Die erfindungsgemäßen Farbstoffmischungen können als Präparation in fester oder in flüssiger (gelöster) Form vorliegen. Sie enthalten im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, bei Vorliegen in fester Form geringe Mengen an Sikkativen und in flüssiger, wäßriger Lösung (einschließlich des Gehaltes von Verdickungsmitteln, wie sie bei Druckpasten üblich sind) Substanzen, die die Haltbarkeit dieser Präparationen gewährleisten, wie beispielsweise schimmelverhütende Mittel.

Im allgemeinen liegen die Farbstoffmischungen als Farbstoffpulver mit einem Gehalt an Elektrolytsalz, das auch als Stellmittel bezeichnet wird, von 10 bis 80 Gew.-%, bezogen auf das Farbstoffpulver bzw. die Präparation, vor. Diese Farbstoffpulver können zudem die erwähnten Puffersubstanzen in einer Gesamtmenge von bis zu 5 %, bezogen auf das Farbstoffpulver, enthalten. Sofern die erfindungsgemäßen Farbstoffmischungen in wäßriger Lösung vorliegen, liegt der Gehalt der erfindungsgemäßen Mischungen in diesen wäßrigen Lösungen zwischen 0,1 und 55 Gew.-%, in der Regel zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) enthalten die erwähnten Puffersubstanzen in der Regel in einer Menge von 0,1 bis 5 Gew.-%, bevorzugt von 0,3 bis 2 Gew.-%.

Die erfindungsgemäßen Farbstoffmischungen können in üblicher Weise hergestellt werden, so durch mechanisches Mischen der einzelnen Farbstoffe in den erforderlichen Anteilen oder, falls D² und D³ gleich D¹ sind, durch Synthese mittels der üblichen Diazotierungs- und Kupplungsreaktionen unter Verwendung von entsprechenden Mischungen der Diazo- und Kupplungskomponenten in einer dem Fachmann geläufigen Weise und den hierzu erforderlichen Mengenanteilen. So kann man beispielsweise in der Weise vorgehen, daß man wäßrige Lösungen von entsprechenden zwei Kupplungskomponenten, so einem Bis-(mono- oder disulfo-hydroxynaphthylamino)-chlortriazin als Kupplungskomponente der Farbstoffe der allgemeinen Formel (1) und einer Kupplungskomponente der allgemeinen Formel (6) 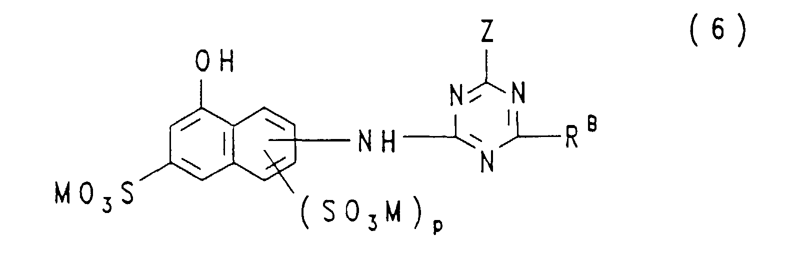 mit M, p, Z und R^{B} der oben angegebenen Bedeutung und wäßrige Lösungen oder Suspensionen der Diazokomponenten der Verbindungen der allgemeinen Formel D¹-NH₂ mit D¹ der oben angegebenen Bedeutung in den entsprechenden Anteilen miteinander bei einem pH-Wert zwischen 3 und 6 umsetzt (kuppelt). Die so erhaltene Farbstoffmischung kann aus der Lösung in üblicher Weise isoliert werden, so beispielsweise durch Aussalzen mit einem Elektrolytsalz, wie Natriumchlorid, Kaliumchlorid oder Lithiumchlorid, oder durch Sprühtrocknung.

Werden die erfindungsgemäßen Farbstoffmischungen durch mechanisches Mischen der Einzelfarbstoffe hergestellt, so werden beim Mischen eventuell erforderliche Stellmittel, Entstaubungsmittel oder weitere Hilfsmittel, die in der Färbereitechnik oder in den hierzu verwendeten Farbstoffpräparationen üblich sind, zugegeben.

Farbstoffmischungen, in denen die Farbstoffchromophore beispielsweise neben einer β-Chlorethylsulfonyl- oder β-Thiosulfatoethylsulfonyl- oder β-Sulfatoethylsulfonyl-Gruppe noch Anteile mit Vinylsulfonylgruppen enthalten, können neben der oben genannten Methode durch Einsatz entsprechender Vinylsulfonyl-Ausgangsaniline auch in der Weise hergestellt werden, daß man die Farbstoffmischung, in denen Y und/oder Y¹ für ein β-Chlorethyl- oder β-Thiosulfatoethyl- oder β-Sulfatoethyl-Rest stehen, mit einer nur für einen Teil dieser Gruppen erforderlichen Menge an Alkali umsetzt und hierbei einen Teil der genannten β-substituierten Ethylsulfonyl-Gruppen in die Vinylsulfonylgruppen überführt. Diese Maßnahme geschieht nach allgemein bekannten Methoden der Überführung von β-substituierten Ethylsulfonyl-Gruppen in die Vinylsulfonylgruppe.

Die erfindungsgemäßen Farbstoffmischungen aus den Farbstoffen der Formeln (1) und (2) liefern nach den in der Technik für faserreaktive Farbstoffe zahlreich beschriebenen Anwendungs- und Fixierverfahren auf hydroxy- und/oder carbonamidgruppenhaltigen Fasermaterialien orange bis rote Färbungen mit gutem Farbaufbau und guter Auswaschbarkeit nicht fixierter Farbstoffanteile. Darüberhinaus sind die erhaltenen Färbungen gut ätzbar. Darüberhinaus sind die Mischungen sehr gut als Kombinationsfarbstoffe in Kombinationsfärbungen mit anderen Farbstoffen geeignet.

Gegenstand der vorliegenden Erfindung ist deshalb auch die Verwendung der erfindungsgemäßen Farbstoffmischungen oder der Farbstoffe der Formeln (1) und (2) gemeinsam zum Färben (einschließlich Bedrucken und in der Kombinationsfärbung) von hydroxy- und/oder carbonamidgruppenhaltigen Fasermaterialien bzw. Verfahren zum Färben solcher Fasermaterialien unter Verwendung einer erfindungsgemäßen Farbstoffmischung oder der Farbstoffe der Formeln (1) und (2) gemeinsam, indem man diese in gelöster Form auf das Substrat appliziert und die Farbstoffe durch Einwirkung eines alkalisch wirkenden Agenz oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen auch mit Vorteil in die Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Ebenfalls erhält man nach den üblichen Druckverfahren für Cellulosefasern - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltender Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können,- farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe der erfindungsgemäßen Farbstoffmischungen mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

### Beispiel 1

440 Teile eines elektrolythaltigen Farbstoffpulvers, das den roten Disazofarbstoff der Formel (A) 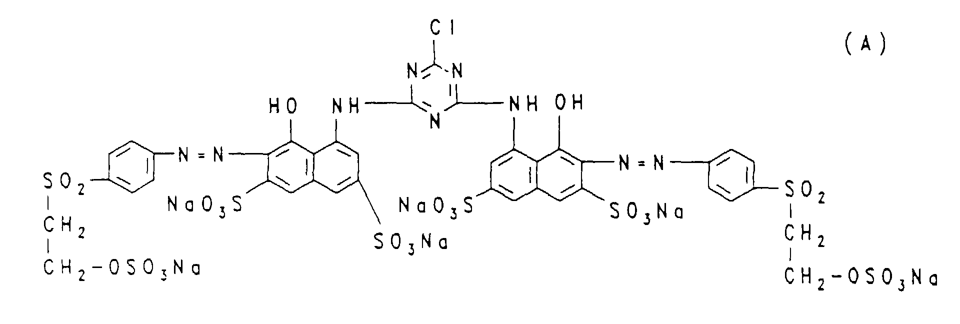 (bekannt aus dem Beispiel 1 der deutschen Patentschrift 2 748 965) zu 50 % enthält, werden mit 72,6 Teilen eines elektrolythaltigen Farbstoffpulvers, das den orangen Monoazofarbstoff der Formel (B) 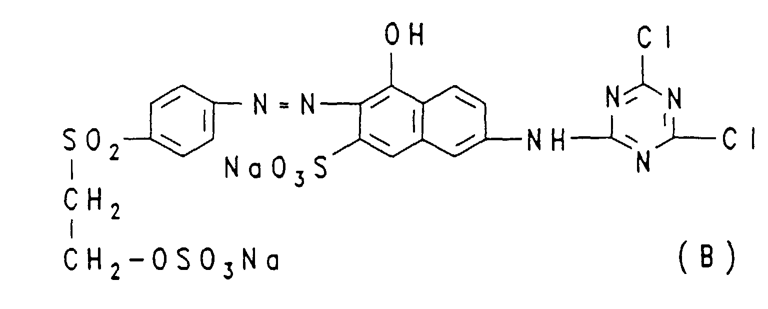 zu 50 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasern Färbungen und Drucke in tiefen orangenen Tönen.

### Beispiel 2

Zur Herstellung einer erfindungsgemäßen Farbstoffmischung stellt man eine Suspension von 288 Teilen 4-(β-Sulfatoethylsulfonyl)-anilin in 250 Teilen Wasser mit etwa 59 Teilen Natriumcarbonat auf einen pH-Wert von 4,5 bis 5 ein, diazotiert die Anilinverbindung mit 186 Volumenteilen einer 38 %igen wäßrigen Natriumnitritlösung nach Zugabe von 234 Volumenteilen einer 30 %igen wäßrigen Salzsäure und 400 Teilen Eis, gibt sodann 300 Teile 2,4-Bis-[(8-hydroxy-3,6-disulfonaphthalin-2-yl)-amino]-6-chloro-1,3,5-triazin und 232 Teile 6-(4,6-Dichlorotriazin-2-yl)-amino-1-hydroxy-naphthalin-3-sulfonsäure hinzu, stellt mittels Natriumcarbonat einen pH-Wert von 5 bis 6 ein und führt die Kupplungsreaktion bei 20°C und innerhalb dieses pH-Bereiches durch. Man erhält eine Farbstofflösung, in welcher die Farbstoffe der in Beispiel 1 genannten Formeln (A) und (B) im Verhältnis von 40:60 enthalten sind. Diese Farbstofflösung kann durch Zugabe von 5 Teilen eines Natriumphosphatpuffers auf einen pH-Wert von 4,5 eingestellt werden. Durch weiteres Verdünnen mit Wasser oder durch Eindampfen der Lösung kann diese flüssige Farbstoffmischung sodann auf die gewünschte Stärke für eine Flüssigpräparation eingestellt werden, die in üblicher Weise entweder direkt, gegebenenfalls nach Zusatz der entsprechenden Menge an einem alkalisch wirkenden Mittel, als Färbebad oder als Färbeflotte verwendet oder der Zubereitung eines Färbebades oder Färbeflotte zugeführt werden kann. Man erhält mit dieser Farbstoffmischung farbtiefe orange Färbungen.

### Beispiel 3

586,4 Teile eines elektrolythaltigen Farbstoffpulvers, das den roten Disazofarbstoff der im Beispiel 1 angegebenen Formel (A) zu 50 % enthält, werden mit 75 Teilen eines elektrolythaltigen Farbstoffpulvers, das den orangen Monoazofarbstoff der Formel (C) 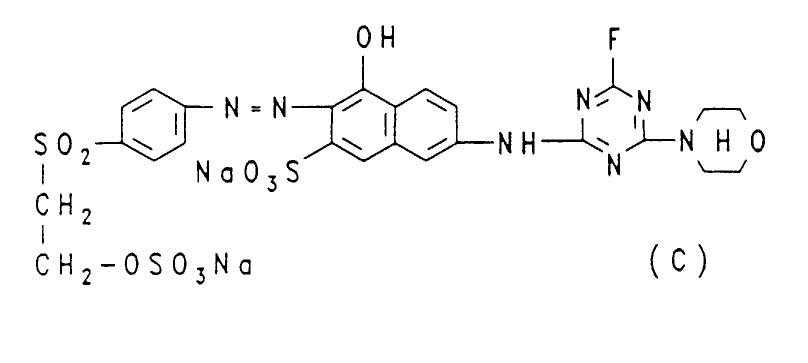 zu 50 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasermaterialien farbstarke Färbungen und Drucke in tiefen orangen Tönen.

### Beispiel 4

146,6 Teile eines elektrolythaltigen Farbstoffpulvers, das den roten Disazofarbstoff der im Beispiel 1 angegebenen Formel (A) zu 50 % enthält, werden mit 86,5 Teilen eines elektrolythaltigen Farbstoffpulvers, das den orangen Monoazofarbstoff der Formel (D) 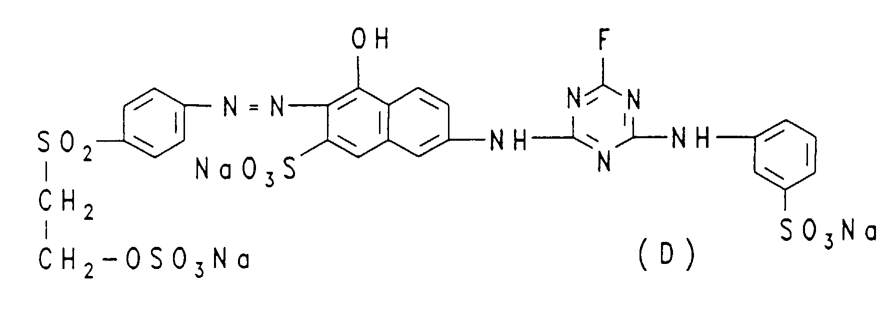 (bekannt aus Beispiel 56 der europäischen Patentanmeldungs-Veröffentlichung Nr. 0 040 806) zu 50 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren, beispielsweise auf Cellulosefasermaterialien farbstarke Färbungen und Drucke in tiefen orangen Tönen.

### Beispiel 5

152,6 Teile eines elektrolythaltigen Farbstoffpulvers, das den roten Disazofarbstoff der Formel (E) 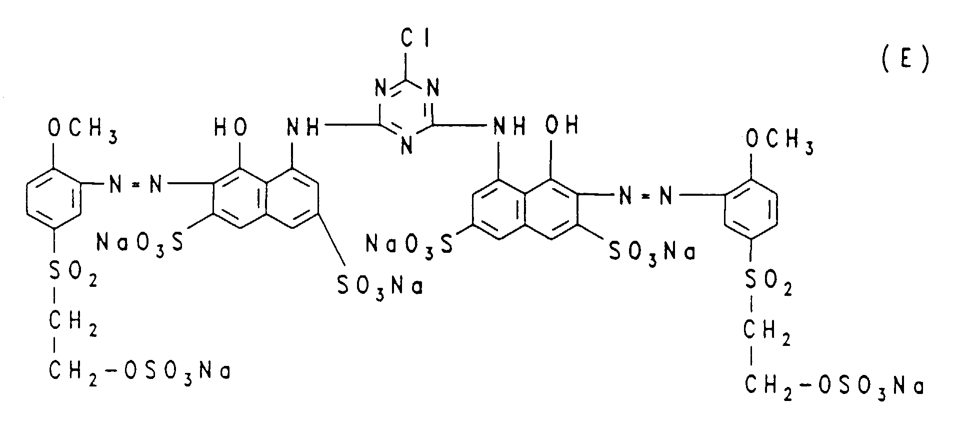 (bekannt aus Beispiel 4 der deutschen Patentschrift 2 748 965) zu 50 % enthält, werden mit 29,0 Teilen eines elektrolythaltigen Farbstoffpulvers, das den orangen Monoazofarbstoff der im Beispiel 1 angegebenen Formel (B) zu 50 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasermaterialien Färbungen und Drucke in tiefen orangen Tönen.

### Beispiel 6

177 Teile eines elektrolythaltigen Farbstoffpulvers, das den roten Disazofarbstoff der Formel (F) 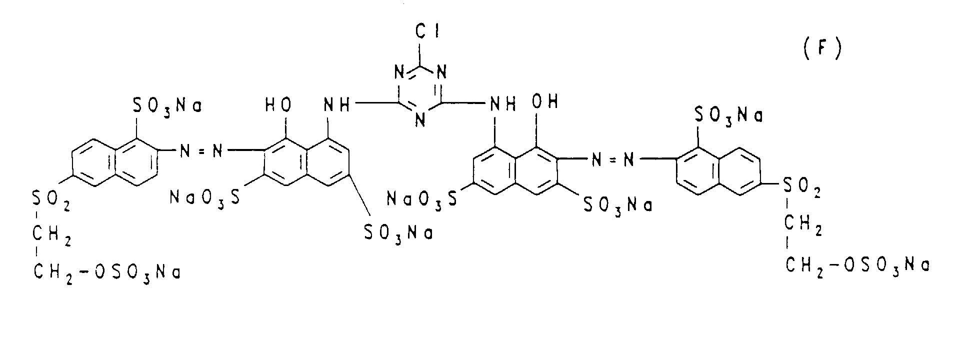 (bekannt aus Beispiel 4 der deutschen Patentschrift 2 748 965) zu 50 % enthält, werden mit 21,8 Teilen eines elektrolythaltigen Farbstoffpulvers, das den orangen Monoazofarbstoff der im Beispiel 1 angegebenen Formel (B) zu 50 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasermaterialien, Färbungen und Drucke in tiefen orangen Tönen.

### Beispiele 7 bis 28

In den nachfolgenden Tabellenbeispielen sind weitere erfindungsgemäße Farbstoffmischungen aus dem Farbstoff der Formel (A) und aus einem Farbstoff entsprechend der allgemeinen Formel (G) 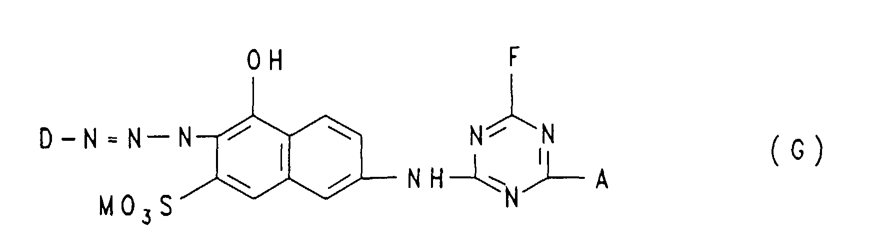 in welcher M die anfangs angegebene Bedeutung hat und die Reste D und A die in dem jeweiligen Tabellenbeispiel angegebenen Bedeutungen besitzen, beschrieben. Diese Farbstoffmischungen ergeben auf den in der Beschreibung genannten Fasermaterialien, wie beispielsweise Cellulosefasermaterialien, nach den in der Technik für faserreaktive Farbstoffe üblichen Applikations- und Fixierverfahren farbstarke, echte Färbungen mit dem in dem jeweiligen Tabellenbeispiel angegebenen Farbton (hier auf Baumwolle).

| Bsp. | Farbstoff der Formel (G) | | Mischungs | Farbton |
|---|---|---|---|---|
| | Rest D | Rest A | verhältnis (A):(G) in Gew.-% | |
| 7 | 1,5-Disulfo-naphth-2-yl | γ-(β'-Sulfato-ethylsulfonyl)-propylamino | 75 : 25 | rot |
| 8 | dito | dito | 50 : 50 | orange |
| 9 | dito | dito | 65 : 35 | rotorange |
| 10 | dito | N-Phenyl-N-[γ-(β'-sulfatoethylsulfonyl)-propyl]-amino | 55 : 45 | orange |
| 11 | dito | dito | 70 : 30 | rot |
| 12 | dito | N-Phenyl-N-[β-(β'-sulfatoethylsulfonyl)-ethyl]-amino | 60 : 40 | orange |
| 13 | dito | dito | 75 : 25 | rot |
| 14 | dito | Bis-N,N-[β-(β'-chlorethylsulfonyl)-ethyl]-amino | 60 : 40 | orange |
| 15 | dito | dito | 65 : 35 | rot |
| 16 | dito | Bis-N,N-(β-vinylsulfonyl-ethyl)-amino | 60 : 40 | orange |
| 17 | dito | dito | 50 : 50 | orange |
| 18 | dito | 3-(β-Sulfatoethylsulfonyl)-phenylamino | 60 : 40 | orange |
| 19 | 4-Methyl-2-sulfophenyl | γ-(β'-Sulfatoethylsulfonyl)-propylamino | 75 : 25 | rot |
| 20 | dito | N-Phenyl-N-[γ-(β'-sulfatoethylsulfonyl)-propyl]-amino | 60 : 40 | orange |
| 21 | dito | dito | 75 : 25 | rot |
| 22 | dito | N-Phenyl-N-[β-(β'-sulfatoethylsulfonyl)-ethyl]-amino | 60 : 40 | orange |
| 23 | dito | dito | 70 : 30 | scharlach |
| 24 | dito | Bis-N,N-[β-(β'chlorethylsulfonyl)-ethyl]-amino | 60 : 40 | orange |
| 25 | dito | dito | 75 : 25 | rot |
| 26 | dito | Bis-N,N-(β-vinylsulfonyl-ethyl)-amino | 65 : 35 | rotorange |
| 27 | dito | dito | 75 : 25 | rot |
| 28 | dito | 3-(β-Sulfatoethylsulfonyl)-phenylamino | 60 : 40 | orange |

## Patentansprüche

1. Farbstoffmischung, enthaltend einen oder mehrere Disazofarbstoffe entsprechend der allgemeinen Formel (1) und einen oder mehrere Monoazofarbstoffe der allgemeinen Formel (2A) oder (2B) oder (2C) oder eine Mischung dieser Monoazofarbstoffe in einem Verhältnis der Farbstoffe (1) zu den Farbstoffen (2) von 95 bis 50 Gew.-% zu 5 bis 50 Gew.-%: 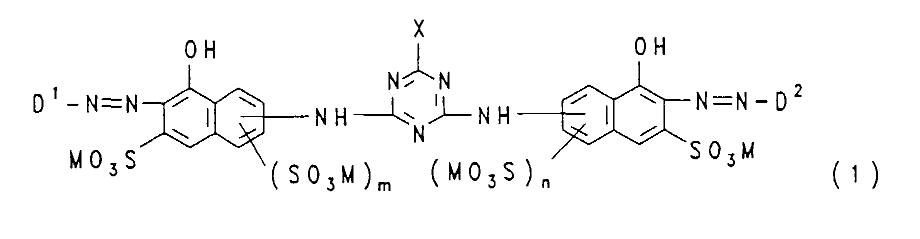 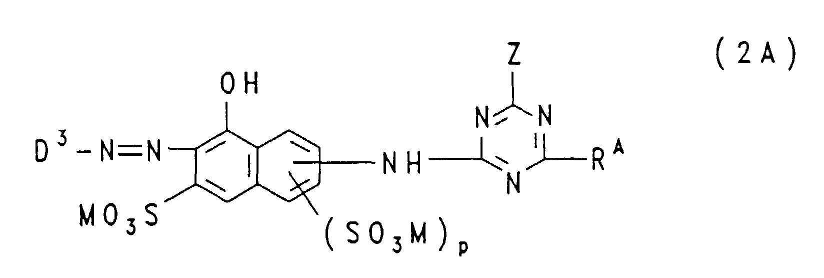 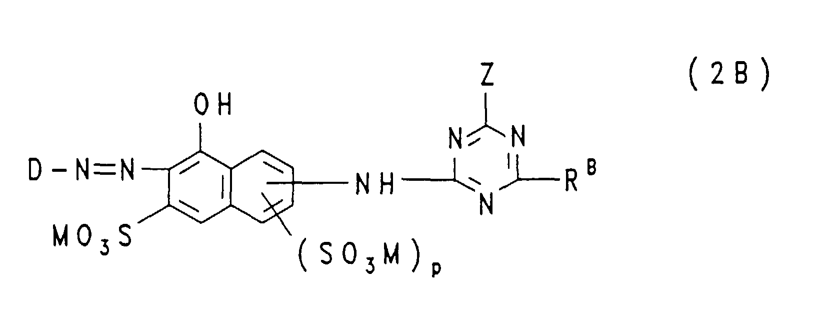 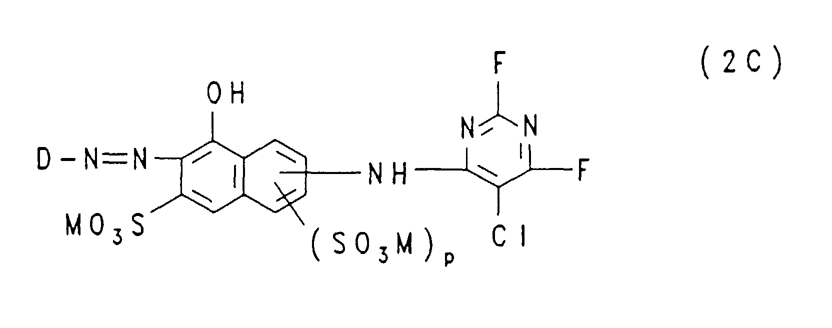 In diesen Formeln bedeuten:
M ist Wasserstoff oder ein Alkalimetall;
D¹ ist eine Gruppe der allgemeinen Formel (2a) oder (2b) 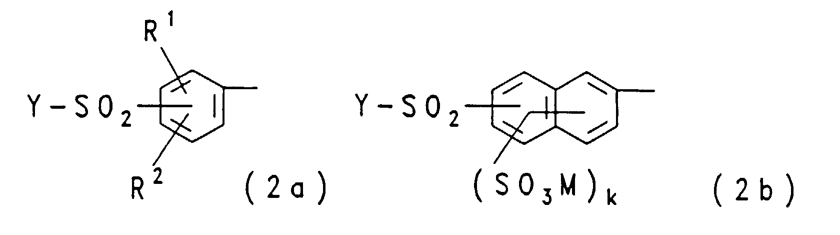 in welchen
R¹ Wasserstoff, Methyl, Ethyl, Methoxy, Ethoxy, Sulfo oder Carboxy,
R² Wasserstoff, Methyl, Ethyl, Methoxy, Ethoxy oder Sulfo ist,
Y Vinyl ist oder Ethyl ist, das in β-Stellung einen Substituenten enthält, der durch Alkali unter Bildung der Vinylgruppe eliminierbar ist,
M die obengenannte Bedeutung hat und
k für die Zahl Null, 1 oder 2 steht (wobei im Falle von k gleich Null diese Gruppe für Wasserstoff steht);
D² hat eine der für D¹ angegebenen Bedeutungen;
D³ hat eine der für D¹ angegebenen Bedeutungen;
D ist eine Gruppe der allgemeinen Formel (3a) oder (3b) 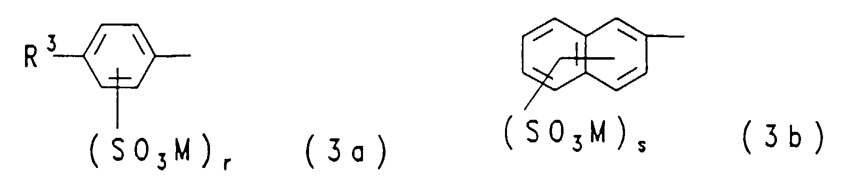 in welchen
R³ Wasserstoff, Methoxy, Ethoxy, Methyl oder Ethyl ist,
M die obengenannte Bedeutung hat,
r für die Zahl Null, 1 oder 2 steht (wobei im Falle von r gleich Null diese Gruppe Wasserstoff bedeutet) und
s die Zahl 1, 2 oder 3 ist;
X ist Chlor, Fluor, Hydroxy, Cyanoamino oder Alkylamino von 1 bis 4 C-Atomen;
m ist die Zahl Null oder 1 (wobei im Falle von m gleich Null diese Gruppe Wasserstoff bedeutet);
n ist die Zahl Null oder 1 (wobei im Falle von n gleich Null diese Gruppe Wasserstoff bedeutet);
p ist die Zahl Null oder 1 (wobei im Falle von p gleich Null diese Gruppe Wasserstoff bedeutet);
Z ist Chlor oder Fluor;
R^{A} ist Chlor, Hydroxy, Phenoxy, Morpholino oder eine Gruppe der allgemeinen Formel (4a), (4b) oder (4c) 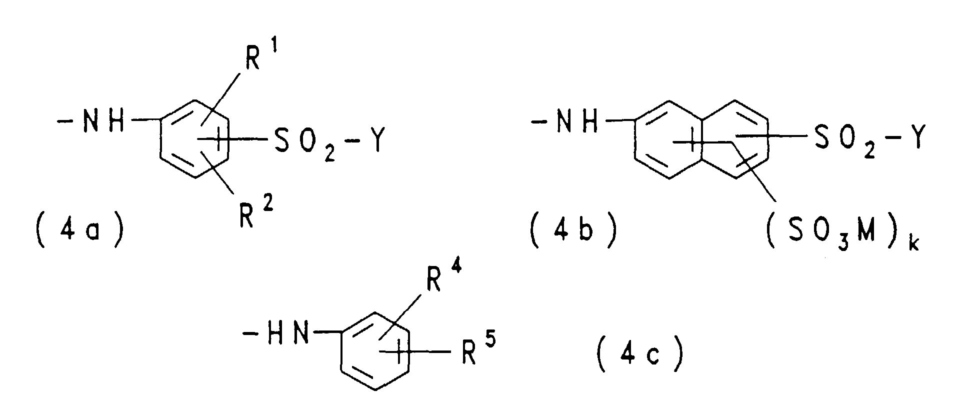 in welchen
R¹, R², Y, M und k eine der obengenannten Bedeutungen haben;
R⁴ Wasserstoff, Sulfo, Carboxy, Methyl, Ethyl, Methoxy, Ethoxy oder Hydroxy ist und
R⁵ Wasserstoff, Sulfo, Methyl, Ethyl, Methoxy oder Ethoxy bedeutet;
R^{B} ist eine Gruppe der allgemeinen Formel (5a), (5b) oder (5c) 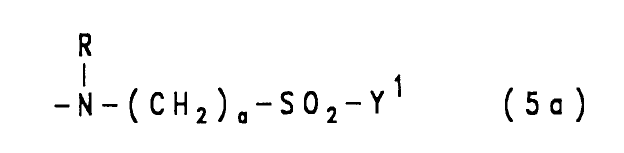 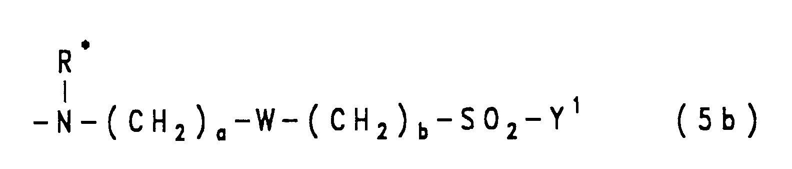 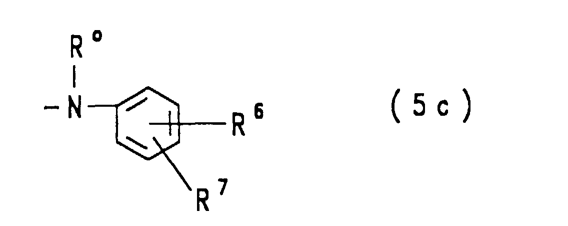 in welchen
Y¹ eine der oben für Y genannten Bedeutungen hat,
R Wasserstoff oder Phenyl ist, das durch 1 oder 2 Substituenten aus der Gruppe Methyl, Ethyl, Methoxy, Ethoxy, Sulfo und Carboxy substituiert sein kann, oder Alkyl von 1 bis 4 C-Atomen ist oder eine Gruppe der allgemeinen Formel -(CH₂)ₐ-SO₂-Y¹ mit Y¹ der oben angegebenen Bedeutung und mit a gleich der Zahl 1, 2 oder 3 ist,
a die Zahl 1, 2 oder 3 ist,
b die Zahl 2 oder 3 ist,
W für eine Gruppe der Formel -O- oder -NH- steht,
R* Wasserstoff oder Phenyl ist, das durch 1 oder 2 Substituenten aus der Gruppe Methyl, Ethyl, Methoxy, Ethoxy, Sulfo und Carboxy substituiert sein kann, oder Alkyl von 1 bis 4 C-Atomen ist oder eine Gruppe der allgemeinen Formel -(CH₂)ₐ-W-(CH₂)_{b}-SO₂-Y¹ mit a, b, W und Y¹ der oben angegebenen Bedeutung ist,
R^{o} Wasserstoff, Methyl, Ethyl oder β-Sulfoethyl ist,
R⁶ Wasserstoff, Methyl, Ethyl, Methoxy, Ethoxy, Sulfo, Carboxy, Hydroxy oder eine Gruppe der allgemeinen Formel -(CH₂)ₐ-SO₂-Y mit Y und a der obengenannten Bedeutung ist und
R⁷ Wasserstoff, Methoxy, Ethoxy oder Sulfo bedeutet.

2. Farbstoffmischung nach Anspruch 1, enthaltend den oder die Farbstoffe der Formel (1) und den oder die Farbstoffe der Formeln (2) im Mischungsverhältnis von 90-50 : 10-50 Gew.-%.

3. Farbstoffmischung nach Anspruch 1 oder 2, dadurch gekennzeichnet, daß im Farbstoff der Formel (1) der Rest X gleich Chlor ist.

4. Farbstoffmischung nach mindestens einem der Ansprüche 1 bis 3, dadurch gekennzeichnet, daß der Farbstoff der allgemeinen Formel (1) ein Farbstoff der allgemeinen Formel (1a) 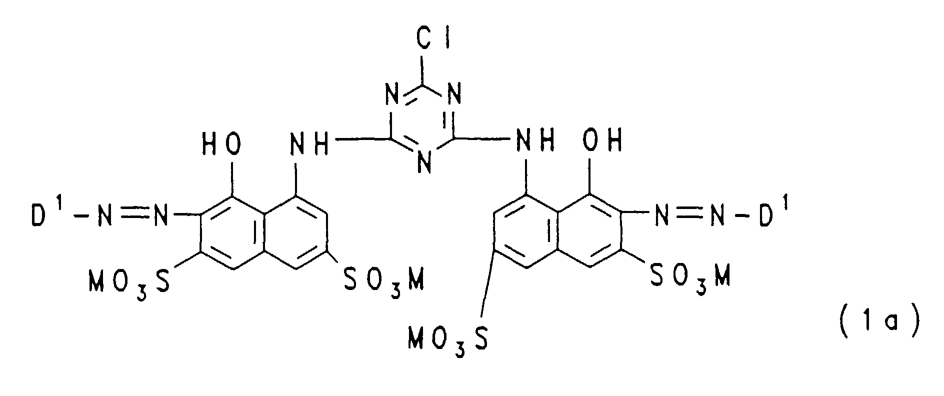 ist, in welchen M die in Anspruch 1 angegebene Bedeutung besitzt und D¹ jedes 3-(β-Sulfatoethylsulfonyl)-phenyl, 4-(β-Sulfatoethylsulfonyl)phenyl, 2-Methoxy-5-(β-sulfatoethylsulfonyl)-phenyl oder 2,5-Dimethoxy-4-(β-sulfatoethylsulfonyl)-phenyl ist.

5. Farbstoffmischung nach mindestens einem der Ansprüche 1 bis 4, dadurch gekennzeichnet, daß Y und Y¹, zueinander gleich oder voneinander verschieden, jedes Vinyl oder β-Sulfatoethyl ist.

6. Verwendung einer Farbstoffmischung nach mindestens einem der Ansprüche 1 bis 5 oder der Farbstoffe (1) und (2) gemeinsam zum Färben von hydroxy- und/oder carbonamidgruppenhaltigem Fasermaterial.

7. Verfahren zum Färben von hydroxy- und/oder carbonamidgruppenhaltigem Fasermaterial, gemäß dem man Farbstoffe in gelöster Form auf das Material aufbringt und die Farbstoffe auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß man als Farbstoffe eine Farbstoffmischung von mindestens einem der Ansprüche 1 bis 5 oder die Farbstoffe (1) und (2) gemeinsam auf das Fasermaterial appliziert und fixiert.

## Claims

1. A dye mixture comprising one or more disazo dyes of the formula (1) and one or more monoazo dyes of the formula (2A) or (2B) or (2C) or a mixture of these monoazo dyes in a ratio of the dyes (1) to the dyes (2) of from 95 to 50% by weight:from 5 to 50% by weight: 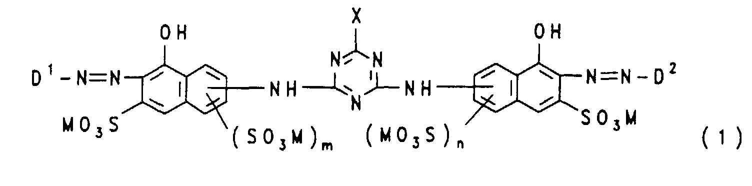 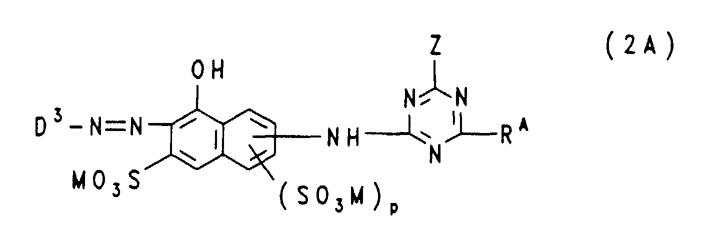 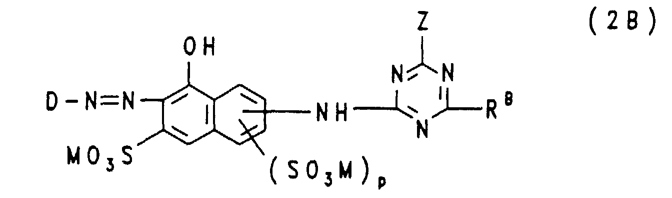 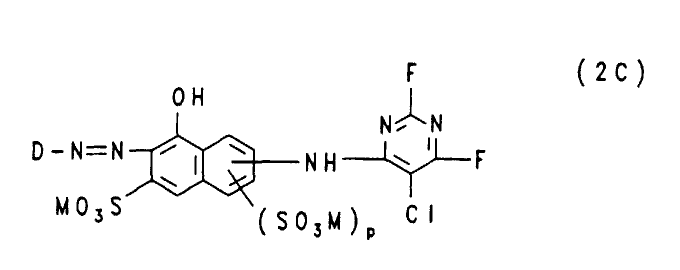 in which formulae the meanings are as follows:
M is hydrogen or an alkali metal;
D¹ is a group of the formula (2a) or (2b) 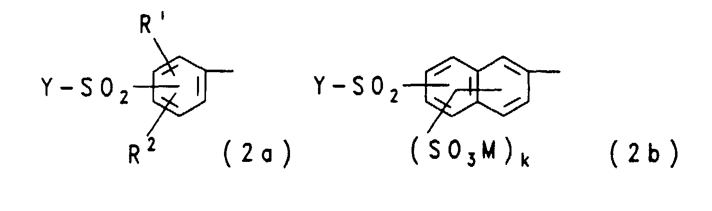 in which
R¹ is hydrogen, methyl, ethyl, methoxy, ethoxy, sulfo or carboxyl,
R² is hydrogen, methyl, ethyl, methoxy, ethoxy or sulfo,
Y is vinyl or is ethyl containing in the β-position a substituent which can be eliminated by alkali to form the vinyl group,
M is as defined above, and
k is the number zero, 1 or 2 (where if k is zero this group is hydrogen);
D² is as defined for D¹;
D³ is as defined for D¹;
D is a group of the formula (3a) or (3b) 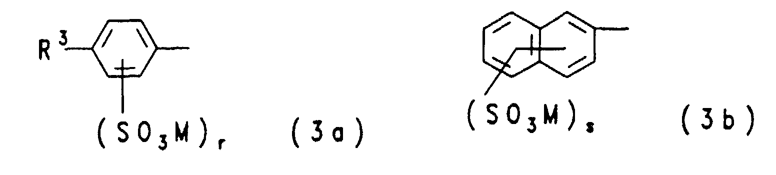 in which
R³ is hydrogen, methoxy, ethoxy, methyl or ethyl,
M is as defined above,
r is the number zero, 1 or 2 (where if r is zero this group is hydrogen) and
s is the number 1, 2 or 3;
X is chlorine, fluorine, hydroxyl, cyanoamino or alkylamino of 1 to 4 carbon atoms;
m is the number zero or 1 (where if m is zero this group is hydrogen);
n is the number zero or 1 (where if n is zero this group is hydrogen);
p is the number zero or 1 (where if p is zero this group is hydrogen);
Z is chlorine or fluorine;
R^{A} is chlorine, hydroxyl, phenoxy, morpholino or a group of the formula (4a), (4b) or (4c) 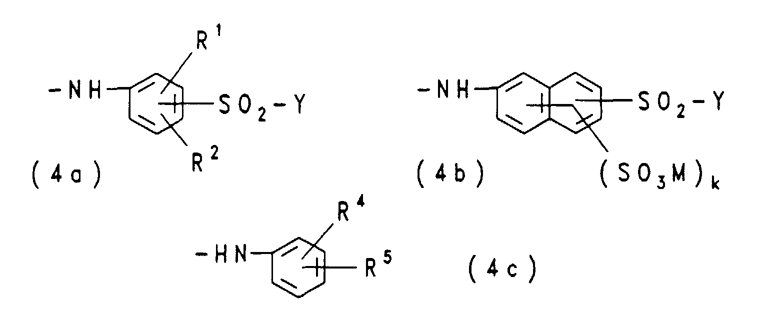 in which
R¹, R², Y, M and k are as defined above,
R⁴ is hydrogen, sulfo, carboxyl, methyl, ethyl, methoxy, ethoxy or hydroxyl, and
R⁵ is hydrogen, sulfo, methyl, ethyl, methoxy or ethoxy;
R^{B} is a group of the formula (5a), (5b) or (5c) 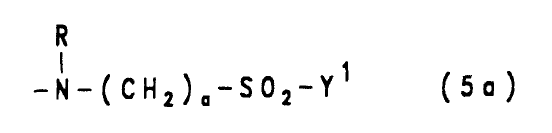 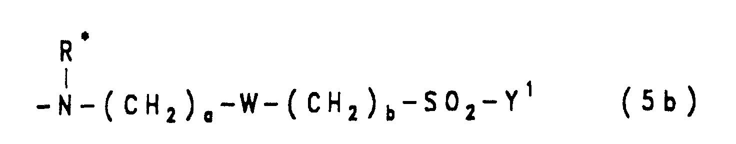 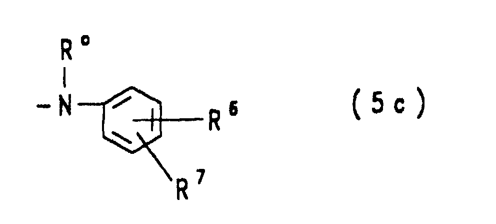 in which
Y¹ is as defined for Y above,
R is hydrogen or phenyl which may be substituted by 1 or 2 substituents from the group consisting of methyl, ethyl, methoxy, ethoxy, sulfo and carboxyl, or is alkyl of 1 to 4 carbon atoms, or is a group of the formula (CH₂)ₐ-SO₂-Y¹ where Y¹ is as defined above and a is the number 1, 2 or 3,
a is the number 1, 2 or 3,
b is the number 2 or 3,
W is a group of the formula -O- or -NH-,
R* is hydrogen or phenyl which may be substituted by 1 or 2 substituents from the group consisting of methyl, ethyl, methoxy, ethoxy, sulfo and carboxyl, or is alkyl of 1 to 4 carbon atoms or is a group of the formula -(CH₂)ₐ-W-(CH₂)_{b}-SO₂-Y¹ where a, b, W and Y¹ are as defined above,
R^{o} is hydrogen, methyl, ethyl or β-sulfoethyl,
R⁶ is hydrogen, methyl, ethyl, methoxy, ethoxy, sulfo, carboxyl, hydroxyl or a group of the formula -(CH₂)ₐ-SO₂-Y where Y and a are as defined above, and
R⁷ is hydrogen, methoxy, ethoxy or sulfo.

2. A dye mixture as claimed in claim 1, comprising the dye(s) of the formula (1) and the dye(s) of the formulae (2) in a ratio of 90-50:10-50% by weight.

3. A dye mixture as claimed in claim 1 or 2, wherein the radical X in the dye of the formula (1) is chlorine.

4. A dye mixture as claimed in at least one of claims 1 to 3, wherein the dye of the formula (1) is a dye of the formula (1a) 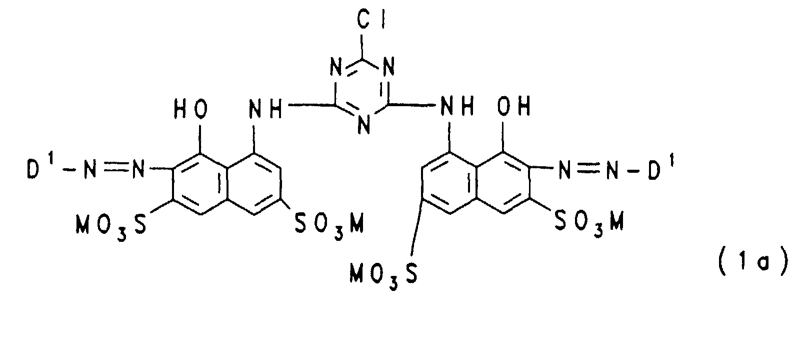 in which M is as defined in claim 1 and D¹ is in each case 3-(β-sulfatoethylsulfonyl)phenyl, 4-(β-sulfatoethylsulfonyl)phenyl, 2-methoxy-5-(β-sulfatoethylsulfonyl)phenyl or 2,5-dimethoxy-4-(β-sulfatoethylsulfonyl) phenyl.

5. A dye mixture as claimed in at least one of claims 1 to 4, wherein Y and Y¹ are identical to or different from one another and are each vinyl or β-sulfatoethyl.

6. The use of a dye mixture as claimed in at least one of claims 1 to 5 or of the dyes (1) and (2) together for dyeing hydroxyl- and/or carboxamido-containing fiber material.

7. A process for dyeing hydroxyl- and/or carboxamido-containing fiber material, by applying to the material dyes in dissolved form and fixing the dyes on the material by means of heat or by means of an alkali or by means of heat and by means of an alkali, wherein the dyes applied to and fixed on the fiber material comprise a dye mixture of at least one of claims 1 to 5 or the dyes (1) and (2) together.

## Revendications

1. Mélange de colorants contenant un ou plusieurs colorants disazoïques selon la formule générale (1) et un ou plusieurs colorants mono-azoïques de formule générale (2A) ou (2B) ou (2C) ou un mélange de ces colorants mono-azoïques en un rapport entre le colorant (1) et les colorants (2) de 95 à 50% en poids sur 5 à 50% en poids : 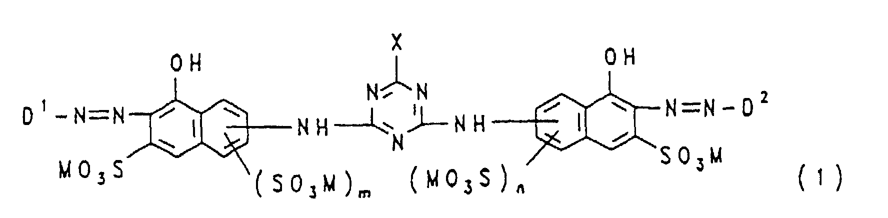 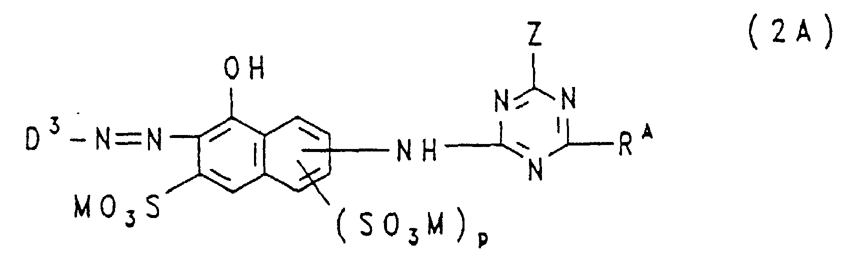 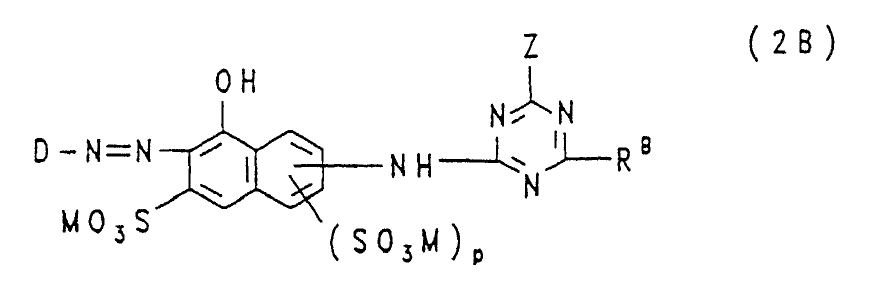 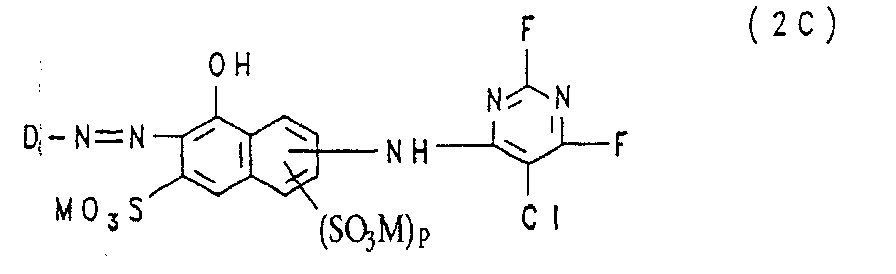 Dans ces formules :
M représente un hydrogène ou un métal alcalin ;
D¹ représente un groupe de formules générales (2a) ou (2b) 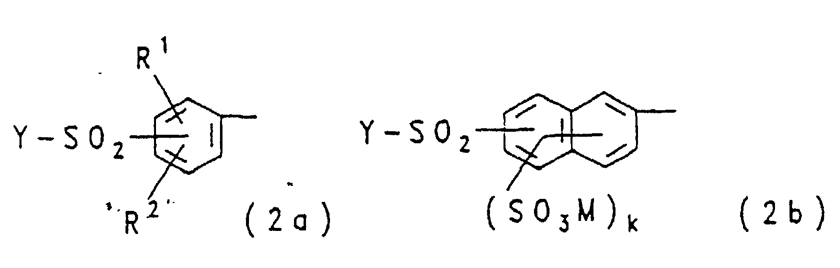 dans lesquelles
R¹ représente un hydrogène, un méthyle, un éthyle, un méthoxy, un éthoxy, un sulfo ou un carboxy,
R² représente un hydrogène, un méthyle, un éthyle, un méthoxy, un éthoxy ou un sulfo,
Y représente un vinyle ou un éthyle qui renferme un substituant en position β, qui peut être éliminé par un alcali par formation du groupe vinyle,
M est tel que défini ci-dessus, et
k désigne le nombre zéro, 1 ou 2 (ce groupe désignant un hydrogène dans le cas où k vaut zéro) ;
D² a l'une des significations indiquées pour D¹ ;
D³ a l'une des significations indiquées pour D¹ ;
D représente un groupe de formules générales (3a) ou (3b) 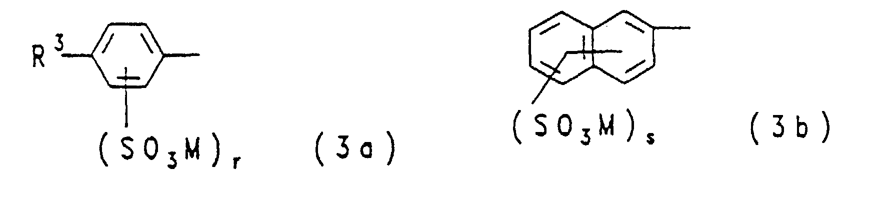 dans lesquelles
R³ représente un hydrogène, un méthoxy, un éthoxy, un méthyle ou un éthyle,
M est tel que défini ci-dessus,
r désigne le nombre zéro, 1 ou 2 (ce groupe représentant un hydrogène dans le cas où r vaut zéro) et
s représente le nombre 1, 2 ou 3 ;
X représente un chlore, un fluor, un hydroxy, un cyanoamino ou un alkylamino ayant de 1 à 4 atomes de carbone ;
m représente le nombre zéro ou 1 (ce groupe représentant un hydrogène dans le cas où m vaut zéro) ;
n représente le nombre zéro ou 1 (ce groupe représentant un hydrogène dans le cas où n vaut zéro) ;
p représente le nombre zéro ou 1 (ce groupe représentant un hydrogène dans le cas où p vaut zéro) ;
Z représente un chlore ou un fluor ;
R^{A} représente un chlore, un hydroxy, un phénoxy, un morpholino ou un groupe de formules générales (4a), (4b) ou (4c) 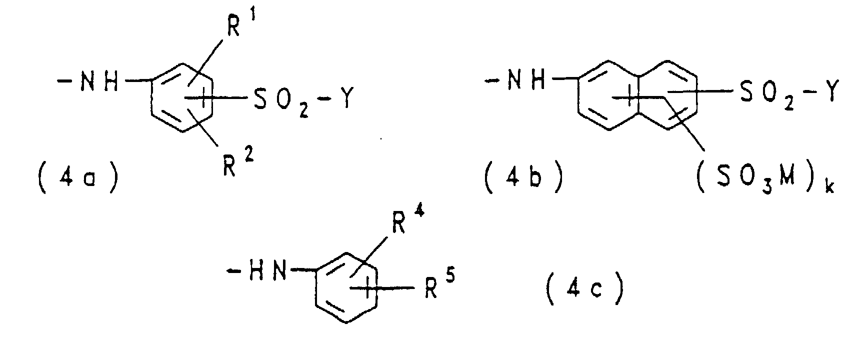 dans lesquelles
R¹, R², Y, M et k sont tels que définis ci-dessus ;
R⁴ représente un hydrogène, un sulfo, un carboxy, un méthyle, un éthyle, un méthoxy, un éthoxy ou un hydroxy, et
R⁵ représente un hydrogène, un sulfo, un méthyle, un éthyle, un méthoxy ou un éthoxy ;
R^{B} représente un groupe de formules générales (5a), (5b) ou (5c) 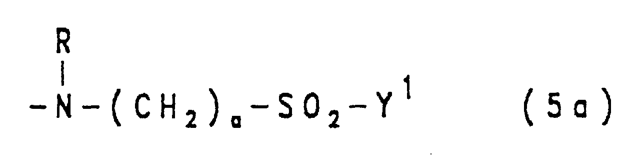 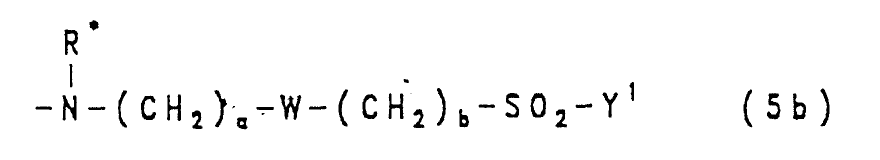 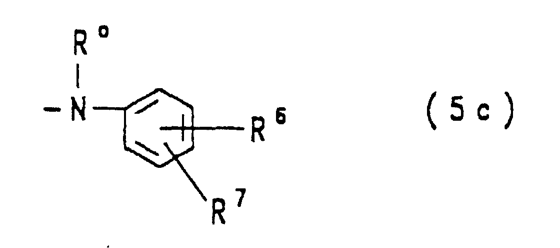 dans lesquelles
Y¹ a une des significations indiquées pour Y,
R représente un hydrogène ou un phényle qui peut être substitué par 1 ou 2 substituants parmi le groupe constitué de méthyle, d' éthyle, de méthoxy, d'éthoxy, de sulfo et de carboxy, ou représente un alkyle ayant de 1 à 4 atomes de carbone, ou représente un groupe de formule générale -(CH₂)ₐ-SO₂-Y¹ où Y¹ est tel que défini ci-dessus et où a est le nombre 1, 2 ou 3,
a représente le nombre 1, 2 ou 3,
b représente le nombre 2 ou 3,
W désigne un groupe de formule -O- ou -NH-,
R* représente un hydrogène ou un phényle qui peut être substitué par 1 ou 2 substituants parmi le groupe constitué de méthyle, d'éthyle, de méthoxy, d' éthoxy, de sulfo et de carboxy, ou représente un alkyle ayant de 1 à 4 atomes de carbone, ou représente un groupe de formule générale -(CH₂)ₐ-W-(CH₂)_{b}-SO₂-Y¹ où a, b, W et Y¹ sont tels que définis ci-dessus,
R⁰ représente un hydrogène, un méthyle, un éthyle ou un β-sulfoéthyle,
R⁶ représente un hydrogène, un méthyle, un éthyle, un méthoxy, un éthoxy, un sulfo, un carboxy, un hydroxy ou un groupe de formule générale -(CH₂)ₐ-SO₂-Y où Y et a sont tels que définis ci-dessus, et
R⁷ représente un hydrogène, un méthoxy, un éthoxy ou un sulfo.

2. Mélange de colorants selon la revendication 1, contenant le ou les colorant(s) de formule (1) et le ou les colorant(s) de formules (2) en un rapport de mélange de 90-50 : 10-50% en poids.

3. Mélange de colorants selon la revendication 1 ou 2, caractérisé en ce que dans le colorant de formule (1), le radical X est un chlore.

4. Mélange de colorants selon au moins l'une des revendications 1 à 3, caractérisé en ce que le colorant de formule générale (1) est un colorant de formule générale (1a) 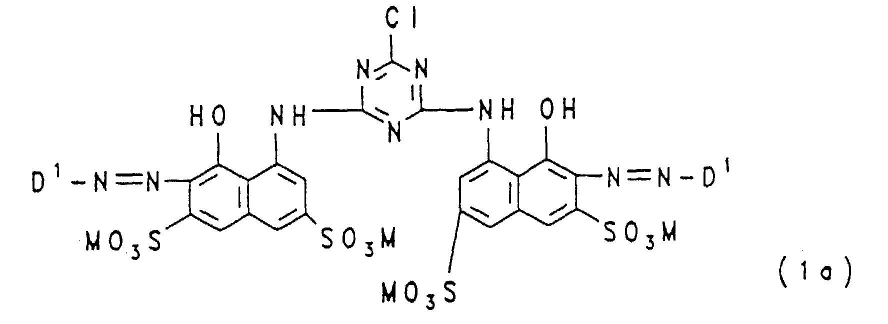 dans laquelle M est tel que défini à la revendication 1 et chaque D¹ est un 3-(β-sulfatoéthylsulfonyl)phényle, un 4-(β-sulfatoéthylsulfonyl)phényle, un 2-méthoxy-5-(β-sulfatoéthylsulfonyl)phényle ou un 2,5-diméthoxy-4-(β-sulfatoéthylsulfonyl)phényle.

5. Mélange de colorants selon au moins l'une des revendications 1 à 4, caractérisé en ce que Y et Y¹, identiques ou différents l'un de l'autre, sont chacun un vinyle ou un β-sulfatoéthyle.

6. Utilisation d'un mélange de colorants selon au moins l'une des revendications 1 à 5 ou des colorants (1) et (2) conjointement, pour la teinture d'une matière fibreuse renfermant des groupes hydroxy et/ou carbonamide.

7. Procédé de teinture d'une matière fibreuse renfermant des groupes hydroxy et/ou carbonamide, selon lequel on applique des colorants sous forme dissoute sur la matière et on fixe les colorants sur la matière par la chaleur ou à l'aide d'un agent à action alcaline, ou par la chaleur et à l'aide d'un agent à action alcaline, caractérisé en ce que l'on applique et fixe un mélange de colorants selon au moins l'une des revendications 1 à 5 ou les colorants (1) et (2) conjointement sur la matière fibreuse en tant que colorants.
